# EUROPEAN PATENT APPLICATION

(11) **EP 4 510 310 A1**
(43) Date of publication of application: **19.02.2025**
(21) Application number: 23794761.9
(22) Date of filing: 02.03.2023
(51) Int. Cl.: H01M 10/615, H01M 10/625, H01M 10/633

(54) **POWER BATTERY SELF-HEATING CONTROL METHOD AND SYSTEM, STORAGE MEDIUM AND ELECTRONIC DEVICE**

(30) Priority: 24.04.2022 CN 202210434646
(71) Applicant: Contemporary Amperex Technology Co., Limited, Ningde, Fujian 352100 (CN)
(72) Inventor: CHEN, Wei, Ningde, Fujian 352100 (CN); PAN, Xianxi, Ningde, Fujian 352100 (CN); CAI, Feilong, Ningde, Fujian 352100 (CN); HUANG, Xiaojian, Ningde, Fujian 352100 (CN); YAN, Yu, Ningde, Fujian 352100 (CN); DAN, Zhimin, Ningde, Fujian 352100 (CN)
(74) Representative: Ziebig Hengelhaupt Intellectual Property Attorneys Patentanwaltskanzlei PartGmbB
(86) International application number: PCT/CN2023/079211
(87) International publication number: WO 2023/207325

(57) **Abstract**

The present application discloses a method for controlling self-heating of a power battery, a system for controlling self-heating of a power battery, a storage medium, and an electronic device. The method includes: acquiring actual temperature rise data of the power battery in a self-heating process of the power battery; acquiring preset calibrated temperature rise data corresponding to a self-heating current of the power battery; and controlling the self-heating of the power battery based on the actual temperature rise data and the preset calibrated temperature rise data. Therefore, using the embodiment of the present application, since the self-heating of the power battery is controlled based on the actual temperature rise data and the preset calibrated temperature rise data in the present application, when there is a large difference between the actual temperature rise data and the preset calibrated temperature rise data, it can be determined that the temperature rise of the power battery is abnormal. **In** this case, a corresponding strategy can be adopted to ensure normal operation of the self-heating of the power battery.

## Description

The present application claims priority to Chinese Patent Application No. 202210434646.5 titled "METHOD FOR CONTROLLING SELF-HEATING OF POWER BATTERY, SYSTEM FOR CONTROLLING SELF-HEATING OF POWER BATTERY, STORAGE MEDIUM, AND ELECTRONIC DEVICE" and filed with the China National Intellectual Property Administration on 24 April 2022, the entire content of which is incorporated herein by reference.

### TECHNICAL FIELD

The present application relates to the technical field of batteries, and in particular, to a method for controlling self-heating of a power battery, a system for controlling self-heating of a power battery, a storage medium, and an electronic device.

### BACKGROUND

As a power source, power batteries are widely used in energy systems of all-electric vehicle model series and hybrid vehicle model series. However, at present, in order to improve the adaptability of electric vehicles in cold regions, self-heating of the power batteries is gradually adapted. The self-heating of batteries is a new function of electric vehicles. The prior art provides protection when a whole vehicle of an electric vehicle is working, but does not provide protection for a low-temperature self-heating process of the battery. Therefore, when low-temperature self-heating is abnormal, a corresponding strategy cannot be promptly adopted to ensure normal operation of the low-temperature self-heating.

### SUMMARY OF THE INVENTION

In view of the above problems, the present application provides a method for controlling self-heating of a power battery, a system for controlling self-heating of a power battery, a storage medium, and an electronic device, and can alleviate the problem of failure in normal operation of low-temperature self-heating caused by abnormal self-heating in a self-heating process of the power battery.

In a first aspect, an embodiment of the present application provides a method for controlling self-heating of a power battery. The method includes:
acquiring actual temperature rise data of the power battery in a self-heating process of the power battery;
acquiring preset calibrated temperature rise data corresponding to a self-heating current of the power battery; and
controlling the self-heating of the power battery based on the actual temperature rise data and the preset calibrated temperature rise data.

In technical solutions of the embodiment of the present application, by calibrating temperature rise data of low-temperature self-heating of the power battery under normal conditions, the preset calibrated temperature rise data can be obtained. The calibrated temperature rise data can represent temperature rise parameters of the power battery during normal low-temperature self-heating, and can provide standard reference values for the self-heating of the power battery in an actual application scenario. Further, by controlling the self-heating of the power battery based on the actual temperature rise data and the preset calibrated temperature rise data, when there is a large difference between the actual temperature rise data and the preset calibrated temperature rise data, it can be determined that the temperature rise of the power battery is abnormal. In this case, a corresponding strategy can be adopted to ensure normal operation of the self-heating of the power battery.

In some embodiments, the acquiring the actual temperature rise data of the power battery includes:
acquiring a temperature value at each moment in the self-heating process of the power battery; and
computing an actual temperature rise rate at a current moment based on the temperature value at each moment to obtain the actual temperature rise data.

Since the temperature change state of the power battery during the low-temperature self-heating can be determined based on temperature rise rate changes, by acquiring the temperature value at each moment in the self-heating process of the power battery, a temperature rise rate at each moment can be computed in real time. The temperature rise rate can represent the actual temperature rise data of the low-temperature self-heating at each moment in the application scenario in real time.

In some embodiments, the acquiring the actual temperature rise data of the power battery includes:
computing actual cumulative temperature rise based on a temperature value of the power battery at the current moment and a temperature value of the power battery when self-heating is switched on, to obtain the actual temperature rise data.

Since the temperature change state of the power battery during the low-temperature self-heating can also be determined based on the actual cumulative temperature rise, by computing a temperature difference between the temperature value of the power battery at the current moment and the temperature of the power battery when the self-heating is switched on, the actual cumulative temperature rise can be computed. The actual cumulative temperature rise can also represent the actual temperature rise data of the low-temperature self-heating at each moment in the application scenario. Similarly, the actual temperature rise rate and the actual cumulative temperature rise can also be combined for determination, which can further improve the accuracy as to whether the low-temperature self-heating is abnormal.

In some embodiments, the acquiring the preset calibrated temperature rise data corresponding to the self-heating current of the power battery includes:
looking up the preset calibrated temperature rise data corresponding to the self-heating current from a preset temperature rise data calibration table based on the self-heating current of the power battery.

Since the preset temperature rise data calibration table is obtained by low-temperature self-heating calibration for different types of power batteries at different currents, the preset calibrated temperature rise data corresponding to the self-heating current can be quickly looked up from the preset temperature rise data calibration table based on the current self-heating current of the power battery.

In some embodiments, the controlling the self-heating of the power battery based on the actual temperature rise data and the preset calibrated temperature rise data includes:
computing a temperature rise data difference between the actual temperature rise data and the preset calibrated temperature rise data, and controlling the self-heating of the power battery based on the temperature rise data difference.

In the present application, the self-heating of the power battery is controlled based on the temperature rise data difference between the actual temperature rise data and the preset calibrated temperature rise data, which can improve the control accuracy of the self-heating of the battery based on different parameters.

In some embodiments, the actual temperature rise data comprises an actual temperature rise rate, and the preset calibrated temperature rise data comprises a calibrated temperature rise rate; and
the controlling the self-heating of the power battery based on the actual temperature rise data and the calibrated temperature rise data includes:
computing a rate difference between the actual temperature rise rate and the calibrated temperature rise rate;
computing, in response to the rate difference exceeding a first preset threshold range, a magnitude of a deviation between the rate difference and the first preset threshold range; and
controlling the self-heating of the power battery based on the magnitude of the deviation.

Since the real-time state of the low-temperature self-heating of the power battery can be determined based on the temperature rise rate changes, the rate difference between the actual temperature rise rate and the calibrated temperature rise rate is computed, and whether the low-temperature self-heating in this case is abnormal can be quickly determined based on the magnitude of the deviation between the difference and the preset threshold range.

**In** some embodiments, the actual temperature rise data comprises actual cumulative temperature rise, and the preset calibrated temperature rise data comprises calibrated cumulative temperature rise; and
the controlling the self-heating of the power battery based on the actual temperature rise data and the calibrated temperature rise data includes:
computing a temperature rise difference between the actual cumulative temperature rise and the calibrated cumulative temperature rise;
computing, in response to the temperature rise difference exceeding a second preset threshold range, a magnitude of a deviation between the temperature rise difference and the second preset threshold range; and
controlling the self-heating of the power battery based on the magnitude of the deviation.

By determining the magnitude of the deviation of the temperature rise difference based on the preset threshold range, the operating state of the low-temperature self-heating of the power battery can be effectively characterized, thus providing more accurate parameters for the determination of the control strategy for the self-heating of the power battery. Further, since the real-time state of the low-temperature self-heating of the power battery can be determined based on temperature rise difference changes, whether the low-temperature self-heating in this case is abnormal can be quickly determined by computing the temperature rise difference and based on the magnitude of the deviation between the difference and the preset threshold range.

**In** some embodiments, the actual temperature rise data comprises the actual temperature rise rate and the actual cumulative temperature rise, and the preset calibrated temperature rise data comprises the calibrated temperature rise rate and the calibrated cumulative temperature rise; and
the controlling the self-heating of the power battery based on the actual temperature rise data and the calibrated temperature rise data includes:
computing a rate difference between the actual temperature rise rate and the calibrated temperature rise rate;
computing a temperature rise difference between the actual cumulative temperature rise and the calibrated cumulative temperature rise;
computing, in response to the rate difference exceeding a first preset threshold range and the temperature rise difference exceeding a second preset threshold range, a magnitude of a deviation between a current temperature rise state and a normal temperature rise state of the power battery based on the rate difference, the first preset threshold range, the temperature rise difference, and the second preset threshold range; and
controlling the self-heating of the power battery based on the magnitude of the deviation.

Since both the rate difference and the temperature rise difference can represent the operating state of the low-temperature self-heating of the power battery, the rate difference and the temperature rise difference can be combined for determination, to improve the accuracy of the determination result.

**In** some embodiments, the controlling the self-heating of the power battery based on the magnitude of the deviation includes:
determining a failure level based on the magnitude of the deviation;
determining a failure handling strategy from a preset failure handling strategy library based on the failure level; and
controlling the self-heating of the power battery based on the failure handling strategy.

**In** the embodiment of the present application, the strategy library and the failure level are provided, to effectively provide effective handling strategies when the power battery fails in operation, thereby ensuring the health state of the power battery.

**In** some embodiments, the controlling the self-heating of the power battery based on the failure handling strategy includes:
stopping the self-heating of the power battery, in response to the failure handling strategy being a heating stop strategy;
   or,
downregulating, in response to the failure handling strategy being a power reducing strategy, a self-heating power of the power battery.

By downregulating the self-heating power of the power battery or stopping the self-heating of the power battery through different strategies, the health state of the power battery can be ensured to prevent the power battery from continuing self-heating under abnormal conditions.

**In** some embodiments, the method further includes:
detecting the temperature value of the power battery in the self-heating process; and
stopping the self-heating of the power battery, in response to the temperature value of the power battery reaching a preset temperature value.

Since a preset temperature threshold is a temperature value at which the low-temperature self-heating of the power battery is stopped, when a temperature value at a current moment reaches the preset temperature threshold, the self-heating of the power battery can be stopped, to effectively prevent the electric energy waste caused by continuous self-heating of the power battery.

**In** some embodiments, the method further includes:
detecting an operating parameter of a current vehicle in real time in the self-heating process;
determining whether there is a failure in the current vehicle based on the operating parameter; and
stopping the self-heating of the power battery, in response to there being a failure in the current vehicle.

Since the low-temperature self-heating of the power battery is for the purpose of normal operation of an electric vehicle, it is necessary to detect the operating parameter of the current vehicle in real time, and determine whether there is a failure in the current vehicle based on the operating parameter. If there is a failure, and the electric vehicle fails in normal operation, the self-heating is not required. **In** this case, the self-heating of the battery should be promptly stopped to avoid the electric energy waste.

**In** a second aspect, an embodiment of the present application provides a system for controlling self-heating of a power battery. The system includes:
an actual temperature rise data acquisition module configured to acquire actual temperature rise data of the power battery in a self-heating process of the power battery;
a calibrated temperature rise data acquisition module configured to acquire preset calibrated temperature rise data corresponding to a self-heating current of the power battery; and
a self-heating control module configured to control the self-heating of the power battery based on the actual temperature rise data and the preset calibrated temperature rise data.

**In** a third aspect, the present application provides a computer-readable storage medium storing a computer program thereon. The program is executed by a processor to implement the method for controlling self-heating of a power battery in the above embodiments.

**In** a fourth aspect, the present application provides an electronic device, including a memory, a processor, and a computer program stored on the memory and runnable on the processor. The processor runs the computer program to implement the method for controlling self-heating of a power battery in the above embodiments.

The above description merely provides an overview of the technical solutions of the present application. **In** order to more clearly understand the technical means of the present application, the present application may be implemented based on the contents of the specification, and in order to make the above and other objectives, features, and advantages of the present application more obvious and understandable, detailed description of the present application is listed below.

### BRIEF DESCRIPTION OF DRAWINGS

The drawings here are incorporated into the description, form a part of the description, show embodiments in accordance with the present application, and are used together with the description to explain the principles of the present application.
FIG. 1 is a schematic flowchart of a method for controlling self-heating of a power battery provided in an embodiment of the present application;
FIG. 2 is a schematic block diagram of a process for controlling self-heating of a power battery in an application scenario provided in the present application;
FIG. 3 is a schematic diagram of a system for controlling self-heating of a power battery provided in an embodiment of the present application; and
FIG. 4 is a schematic diagram of an electronic device provided in an embodiment of the present application.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to two or more (including two). Similarly, "multiple groups" refers to two or more groups (including two groups), and "multiple pieces" refers to two or more pieces (including two pieces).

In the description of the embodiments of the present application, the orientation or positional relationships indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential", etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of the power batteries, the market demand is also constantly expanding.

The inventors of the present application noticed that during self-heating of a power battery, the prior art provides protection when a whole vehicle of an electric vehicle is working, but does not provide protection for a low-temperature self-heating process of the battery. Therefore, when low-temperature self-heating is abnormal, a corresponding strategy cannot be promptly adopted to ensure normal operation of the low-temperature self-heating.

In order to alleviate the problem of failure in normal operation of the low-temperature self-heating caused by abnormal self-heating in a self-heating process of the power battery, the applicant found through researches that the self-heating of the power batter can be controlled in the self-heating process based on actual temperature rise data and preset calibrated temperature rise data.

Based on the above considerations, in order to solve the problem of failure in normal operation of the low-temperature self-heating caused by abnormal self-heating in the self-heating process of the power battery, the inventors designed a method for controlling self-heating of a power battery after in-depth researches, including first acquiring actual temperature rise data of the power battery in a self-heating process of the power battery; then acquiring preset calibrated temperature rise data corresponding to a self-heating current of the power battery; and finally controlling the self-heating of the power battery based on the actual temperature rise data and the preset calibrated temperature rise data.

**In** such a method for controlling self-heating of a power battery, since the self-heating of the power battery is controlled based on the actual temperature rise data and the preset calibrated temperature rise data, when there is a large difference between the actual temperature rise data and the preset calibrated temperature rise data, it can be determined that the temperature rise of the power battery is abnormal. **In** this case, a corresponding strategy can be adopted to ensure normal operation of the self-heating of the power battery.

The power battery disclosed in the embodiment of the present application can be used in, but not limited to, an electronic apparatus, such as an electrical device, a ship, or an aircraft. A power source system of the electric apparatus may be composed of the power battery and battery disclosed in the present application, which is conductive to maintaining the voltage of the power battery in a preset safe voltage range, thereby ensuring that the power battery will not be damaged by self-heating conditions.

An embodiment of the present application provides an electrical apparatus using a battery as a power source. The electrical apparatus may be, but is not limited to, a mobile phone, a tablet, a laptop, an electric toy, an electric tool, a battery cart, an electric vehicle, a ship, a spacecraft, and the like. The electric toy may include a stationary or mobile electric toy, such as a game machine, an electric car toy, an electric ship toy, or an electric airplane toy, and the spacecraft may include an airplane, a rocket, an aerospace plane, a spaceship, and the like.

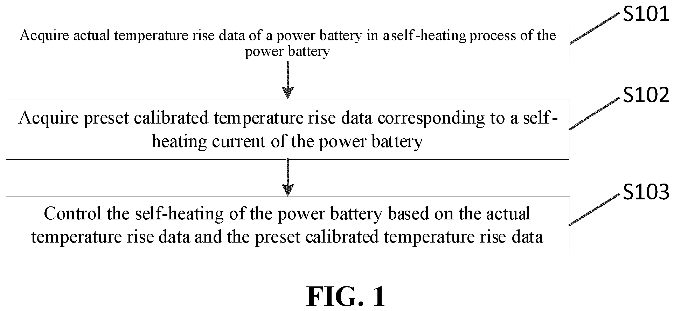

Referring to FIG. 1, a schematic flowchart of a method for controlling self-heating of a power battery provided in an embodiment of the present application is shown. As show in FIG. 1, the method in the embodiment of the present application may include the following steps:
S101: acquiring actual temperature rise data of the power battery in a self-heating process of the power battery.

The power battery is an energy storage power source system, and is widely applied in electric transport tools, such as electric bicycles, electric motorcycles, and electric vehicles, as well as many fields, such as military equipment and aerospace. The actual temperature rise data is determined during low-temperature self-heating of the power battery in an actual application scenario. The actual temperature rise data includes an actual temperature rise rate and/or actual cumulative temperature rise.

Usually, self-heating is designed to satisfy low-temperature charging requirements of the power battery. As the demand for new energy vehicles is increasing year by year, climate restrictions on electric vehicles are becoming increasingly obvious. As is known to all, in a low-temperature environment, the power battery will have restricted performance, or even fails to be charged, so that the self-heating emerges.

In an embodiment of the present application, in the self-heating process of the power battery, it is further necessary to detect an operating parameter of a current vehicle in real time, then determine whether there is a failure in the current vehicle based on the operating parameter, and stop the self-heating of the power battery if there is a failure in the current vehicle. Since the low-temperature self-heating of the power battery is for the purpose of normal operation of an electric vehicle, it is necessary to detect the operating parameter of the current vehicle in real time, and determine whether there is a failure in the current vehicle based on the operating parameter. If there is a failure, and the electric vehicle fails in normal operation, the self-heating is not required. In this case, the self-heating of the battery should be promptly stopped to avoid the electric energy waste.

**In** an embodiment of the present application, in the self-heating process of the power battery, it is further necessary to detect a temperature value of the power battery, and stop the self-heating of the power battery if the temperature value of the power battery reaches a preset temperature value. Since a preset temperature threshold is a temperature value at which the low-temperature self-heating of the power battery is stopped, when a temperature value at a current moment reaches the preset temperature threshold, the self-heating of the power battery can be stopped, to effectively prevent the electric energy waste caused by continuous self-heating of the power battery.

Further, if the temperature value of the power battery does not reach the preset temperature value, execution of steps S101-S103 is continued to continuously control the self-heating of the power battery.

In a possible implementation, when the actual temperature rise data of the power battery is acquired, a temperature value at each moment in the self-heating process of the power battery is first acquired, and then an actual temperature rise rate at the current moment is computed based on the temperature value at each moment, to obtain the actual temperature rise data. Since the temperature change state of the power battery during the low-temperature self-heating can be determined based on temperature rise rate changes, by acquiring the temperature value at each moment in the self-heating process of the power battery, a temperature rise rate at each moment can be computed in real time. The temperature rise rate can represent the actual temperature rise data of the low-temperature self-heating at each moment in the application scenario in real time.

In another possible implementation, when the actual temperature rise data of the power battery is acquired, the actual cumulative temperature rise can be computed based on the temperature value of the power battery at the current moment and the temperature value of the power battery when the self-heating is switched on, to obtain the actual temperature rise data. Since the temperature change state of the power battery during the low-temperature self-heating can also be determined based on the actual cumulative temperature rise, by computing a temperature difference between the temperature value of the power battery at the current moment and the temperature of the power battery when the self-heating is switched on, the actual cumulative temperature rise can be computed. The actual cumulative temperature rise can also represent the actual temperature rise data of the low-temperature self-heating at each moment in the application scenario.

In another possible implementation, when the actual temperature rise data of the power battery is acquired, a temperature value at each moment in the self-heating process of the power battery is first acquired, then an actual temperature rise rate at the current moment is computed based on the temperature value at each moment, then the actual cumulative temperature rise is computed based on the temperature value of the power battery at the current moment and the temperature value of the power battery when self-heating is switched on, and finally the actual temperature rise rate and the actual cumulative temperature rise are determined as the actual temperature rise data of the power battery. Similarly, the actual temperature rise rate and the actual cumulative temperature rise can also be combined for determination, which can further improve the accuracy as to whether the low-temperature self-heating is abnormal.

In a specific implementation, for example, when the actual temperature rise rate at the current moment is computed based on the temperature value at each moment, it is necessary to determine a historical temperature value at a last moment from the temperature value at each moment, then compute a difference between the temperature value at the current moment and the historical temperature value at the last moment, and finally determine a ratio of a duration of the difference at the current moment to a duration of the difference at the last moment as the actual temperature rise rate at the current moment. The temperature rise rate is computed by determining a temperature difference between adjacent moments, so that the computing result is more detailed, and the accuracy of determination is improved.

S102: acquiring preset calibrated temperature rise data corresponding to a self-heating current of the power battery.

The preset calibrated temperature rise data is calibrated for different types of power batteries during low-temperature self-heating at different currents. The preset calibrated temperature rise data is stored in a table, which is a relationship mapping table between the current and the preset calibrated temperature rise data.

In a possible implementation, when the preset calibrated temperature rise data corresponding to the self-heating current of the power battery is acquired, the preset calibrated temperature rise data corresponding to the self-heating current is looked up from a preset temperature rise data calibration table based on the self-heating current of the power battery. Since the preset temperature rise data calibration table is obtained by low-temperature self-heating calibration for different types of power batteries at different currents, the preset calibrated temperature rise data corresponding to the self-heating current can be quickly looked up from the preset temperature rise data calibration table based on the current self-heating current of the power battery.

In another possible implementation, when the preset calibrated temperature rise data corresponding to the self-heating current of the power battery is acquired, the preset calibrated temperature rise data may be pre-stored on the electric vehicle based on a self-heating rated current, that is, the pre-stored preset calibrated temperature rise data is acquired, which can reduce a duration for determining the preset calibrated temperature rise data by lookup in the table during the self-heating, and improve the control efficiency of the low-temperature self-heating of the power battery.

S103: controlling the self-heating of the power battery based on the actual temperature rise data and the preset calibrated temperature rise data.

In an embodiment of the present application, when the self-heating of the power battery is controlled based on the actual temperature rise data and the preset calibrated temperature rise data, a temperature rise data difference between the actual temperature rise data and the preset calibrated temperature rise data is first computed, and the self-heating of the power battery is controlled based on the temperature rise data difference. In the present application, the self-heating of the power battery is controlled based on the temperature rise data difference between the actual temperature rise data and the preset calibrated temperature rise data, which can improve the control accuracy of the self-heating of the battery based on different parameters.

In an embodiment of the present application, the actual temperature rise data comprises an actual temperature rise rate, and the preset calibrated temperature rise data comprises a calibrated temperature rise rate. When the temperature rise data difference between the actual temperature rise data and the preset calibrated temperature rise data is computed, and the self-heating of the power battery is controlled based on the temperature rise data difference, a rate difference between the actual temperature rise rate and the calibrated temperature rise rate is first computed; if the rate difference exceeds a first preset threshold range, a magnitude of a deviation between the rate difference and the first preset threshold range is computed; and finally the self-heating of the power battery is controlled based on the magnitude of the deviation. Since the real-time state of the low-temperature self-heating of the power battery can be determined based on the temperature rise rate changes, the rate difference between the actual temperature rise rate and the calibrated temperature rise rate is computed, and whether the low-temperature self-heating in this case is abnormal can be quickly determined based on the magnitude of the deviation between the difference and the preset threshold range.

In an embodiment of the present application, the actual temperature rise data comprises the actual temperature rise rate and the actual cumulative temperature rise, and the preset calibrated temperature rise data comprises the calibrated temperature rise rate and the calibrated cumulative temperature rise. When the temperature rise data difference between the actual temperature rise data and the preset calibrated temperature rise data is computed, and the self-heating of the power battery is controlled based on the temperature rise data difference, a temperature rise difference between the actual cumulative temperature rise and the calibrated cumulative temperature rise is first computed; if the temperature rise difference exceeds a second preset threshold range, a magnitude of a deviation between the temperature rise difference and the second preset threshold range is computed; and finally the self-heating of the power battery is controlled based on the magnitude of the deviation. By determining the magnitude of the deviation of the temperature rise difference based on the preset threshold range, the operating state of the low-temperature self-heating of the power battery can be effectively characterized, thus providing more accurate parameters for the determination of the control strategy for the self-heating of the power battery. Further, since the real-time state of the low-temperature self-heating of the power battery can be determined based on temperature rise difference changes, whether the low-temperature self-heating in this case is abnormal can be quickly determined by computing the temperature rise difference and based on the magnitude of the deviation between the difference and the preset threshold range.

In an embodiment of the present application, the actual temperature rise data comprises the actual temperature rise rate and the actual cumulative temperature rise, and the preset calibrated temperature rise data comprises the calibrated temperature rise rate and the calibrated cumulative temperature rise. When the temperature rise data difference between the actual temperature rise data and the preset calibrated temperature rise data is computed, and the self-heating of the power battery is controlled based on the temperature rise data difference, the rate difference between the actual temperature rise rate and the calibrated temperature rise rate is first computed; then the temperature rise difference between the actual cumulative temperature rise and the calibrated cumulative temperature rise is computed; if the rate difference exceeds the first preset threshold range and the temperature rise difference exceeds the second preset threshold range, a magnitude of a deviation between a current temperature rise state and a normal temperature rise state of the power battery is computed based on the rate difference, the first preset threshold range, the temperature rise difference, and the second preset threshold range; and finally the self-heating of the power battery is controlled based on the magnitude of the deviation. Since both the rate difference and the temperature rise difference can represent the operating state of the low-temperature self-heating of the power battery, the rate difference and the temperature rise difference can be combined for determination, to improve the accuracy of the determination result.

Specifically, when the self-heating of the power battery is controlled based on the magnitude of the deviation, a failure level is first determined based on the magnitude of the deviation, a failure handling strategy is determined from a preset failure handling strategy library based on the failure level, and finally the self-heating of the power battery is controlled based on the failure handling strategy. In the embodiment of the present application, the strategy library and the failure level are provided, to effectively provide effective handling strategies when the power battery fails in operation, thereby ensuring the health state of the power battery.

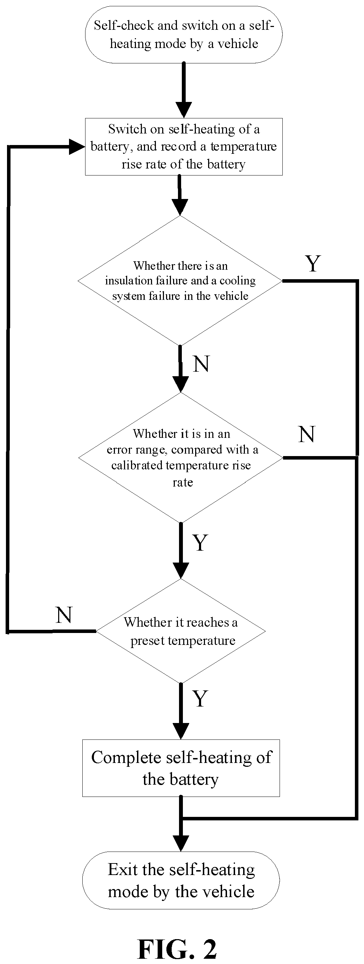

For example, as shown in FIG. 2, FIG. 2 shows a schematic block diagram of a process for controlling self-heating of a power battery in an application scenario provided in the present application. A vehicle first self-checks and switches on a self-heating mode; records a temperature rise rate of the battery after low-temperature self-heating of the power battery is switched on; then determines whether there is an insulation failure and a cooling system failure in the vehicle; controls the vehicle to exit the self-heating mode if there is an insulation failure and a cooling system failure in the vehicle; compares the recorded temperature rise rate of the battery with the calibrated temperature rise rate if there is not an insulation failure or a cooling system failure in the vehicle; determines whether a difference between the two is within an error range; controls the vehicle to exit the self-heating mode if the difference between the two is not within the error range; determines whether the temperature of the power battery reaches a preset temperature if the difference between the two is within the error range; continues to return to the step of recording the temperature rise rate of battery for determination if the temperature of the power battery does not reach the preset temperature; and completes the self-heating of the battery if the temperature of the power battery reaches the preset temperature, and controls the vehicle to exit the self-heating mode.

In an embodiment of the present application, in a self-heating process of the power battery, actual temperature rise data of the power battery is acquired; preset calibrated temperature rise data corresponding to a self-heating current of the power battery is acquired; and the self-heating of the power battery is controlled based on the actual temperature rise data and the preset calibrated temperature rise data. Therefore, using the embodiment of the present application, since the self-heating of the power battery is controlled based on the actual temperature rise data and the preset calibrated temperature rise data in the present application, when there is a large difference between the actual temperature rise data and the preset calibrated temperature rise data, it can be determined that the temperature rise of the power battery is abnormal. In this case, a corresponding strategy can be adopted to ensure normal operation of the self-heating of the power battery.

System embodiments of the present application are provided below, which can be configured to implement the method embodiments of the present application. The method embodiments of the present application may be referred to for details that are not disclosed in the system embodiments of the present application.

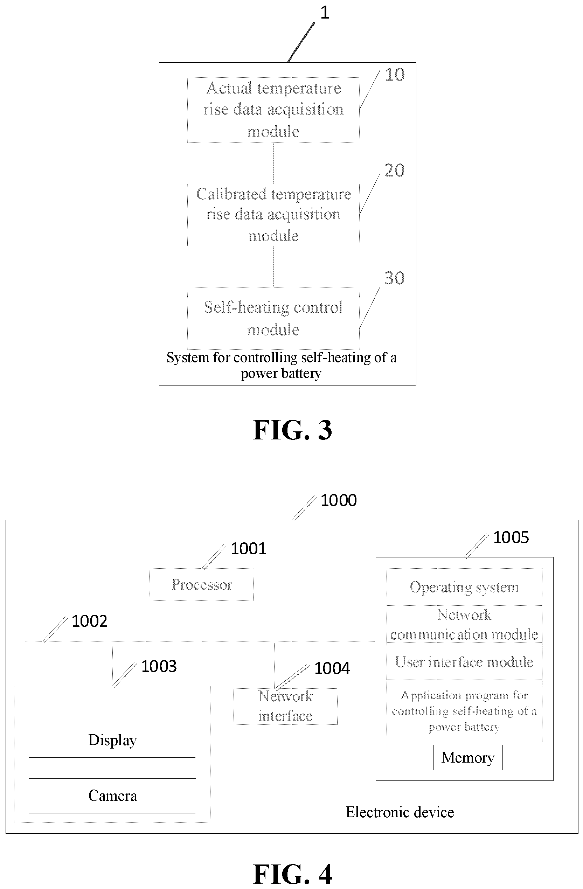

Referring to FIG. 3, a schematic structural diagram of a system for controlling self-heating of a power battery provided in an example embodiment of the present application is shown. The system for controlling self-heating of a power battery can be implemented as a whole or a part of an intelligent robot through software, hardware, or a combination of both. The system 1 includes an actual temperature rise data acquisition module 10, a calibrated temperature rise data acquisition module 20,and a self-heating control module 30.

The actual temperature rise data acquisition module 10 is configured to acquire actual temperature rise data of the power battery in a self-heating process of the power battery;
the calibrated temperature rise data acquisition module 20 is configured to acquire preset calibrated temperature rise data corresponding to a self-heating current of the power battery; and
the self-heating control module 30 is configured to control the self-heating of the power battery based on the actual temperature rise data and the preset calibrated temperature rise data.

It should be noted that when the system for controlling self-heating of a power battery provided in the above embodiments performs the method for controlling self-heating of a power battery, the system is only illustrated with the division of the above functional modules as an example. **In a** practical application, the above functions may be allocated to, and completed by, different functional modules as required. That is, the internal structure of the device is divided into different functional modules to complete all or a part of the functions described above. **In** addition, the system for controlling self-heating of a power battery provided in the above embodiments belong to the same concept as the embodiments of the method for controlling self-heating of a power battery, and the method embodiments are referred to for details of the implementations thereof, which will not be repeated here.

The serial numbers in the above embodiments of the present application are only for the purpose of description, and do not represent the advantages or disadvantages of the embodiments.

In an embodiment of the present application, in a self-heating process of the power battery, actual temperature rise data of the power battery is acquired; preset calibrated temperature rise data corresponding to a self-heating current of the power battery is acquired; and the self-heating of the power battery is controlled based on the actual temperature rise data and the preset calibrated temperature rise data. Therefore, using the embodiment of the present application, since the self-heating of the power battery is controlled based on the actual temperature rise data and the preset calibrated temperature rise data in the present application, when there is a large difference between the actual temperature rise data and the preset calibrated temperature rise data, it can be determined that the temperature rise of the power battery is abnormal. In this case, a corresponding strategy can be adopted to ensure normal operation of the self-heating of the power battery.

The present application further provides a computer-readable medium storing a program instruction thereon. When the program instruction is executed by a processor to implement the method for controlling self-heating of a power battery provided in the above method embodiments.

The present application further provides a computer program product containing an instruction that, when running on a computer, causes the computer to execute the method for controlling self-heating of a power battery in the above method embodiments.

Referring to FIG. 4, a schematic structural diagram of an electronic device provided in an embodiment of the present application is shown. As shown in FIG. 4, the electronic device 1000 may include: at least one processor 1001, at least one network interface 1004, a user interface 1003, a memory 1005, and at least one communication bus 1002.

The communication bus 1002 is configured to implement connection communication between these components.

The user interface 1003 may comprise a display and a camera, and optionally, the user interface 1003 may further include a standard wired interface and a standard wireless interface.

The network interface 1004 may optionally include a standard wired interface and a standard wireless interface (such as a WI-FI interface).

The processor 1001 may include one or more processing cores. The processor 1001 uses various interfaces and circuits to connect various parts in the whole electronic device 1000, and executes various functions and processing data of the electronic device 1000 by running or executing an instruction, a program, a code set, or an instruction set stored in the memory 1005, and invoking data stored in the memory 1005. Optionally, the processor 1001 may be implemented in at least one hardware form of digital signal processing (DSP), a field-programmable gate array (FPGA), and a programmable logic array (PLA). The processor 1001 may integrate a combination of one or more of a central processing unit (CPU), a graphics processor (GPU), a modem, etc. The CPU is mainly configured to process an operating system, a user interface, and an application program, etc.; the GPU is configured to render and draw a content to be displayed on the display; and the modem is configured to process wireless communication. It can be understood that the above modem may not be integrated into the processor 1001, and may be implemented separately by a chip.

The memory 1005 may include a random access memory (RAM), or may include a read-only memory. Optionally, the memory 1005 includes a non-transitory computer-readable storage medium. The memory 1005 may be configured to store instructions, programs, codes, code sets, or instruction sets. The memory 1005 may include a program storage region and a data storage region, wherein the program storage region can store instructions for implementing the operating system, instructions for at least one function (such as a touch function, a sound playing function, or an image playing function), instructions for implementing the above method embodiments; and the data storage region can store the data involved in the above method embodiments. The memory 1005 optionally may further be at least one storage apparatus located away from the aforementioned processor 1001. As shown in FIG. 4, the memory 1005, as a computer storage medium, may include an operating system, a network communication module, a user interface module, and an application program for controlling self-heating of a power battery.

In the electronic device 1000 shown in FIG. 4, the user interface 1003 is mainly configured to provide an input interface for a user and acquire data inputted by the user; and the processor 1001 can be configured to invoke the application program for controlling self-heating of a power battery stored in the memory 1005, and specifically perform the following operations:
acquiring actual temperature rise data of the power battery in a self-heating process of the power battery;
acquiring preset calibrated temperature rise data corresponding to a self-heating current of the power battery; and
controlling the self-heating of the power battery based on the actual temperature rise data and the preset calibrated temperature rise data.

In an embodiment, when performing the acquiring the actual temperature rise data of the power battery, the processor 1001 specifically performs the following operations:
acquiring a temperature value at each moment in the self-heating process of the power battery; and
computing an actual temperature rise rate at a current moment based on the temperature value at each moment to obtain the actual temperature rise data.

In an embodiment, when performing the acquiring the actual temperature rise data of the power battery, the processor 1001 specifically performs the following operations:
computing actual cumulative temperature rise based on a temperature value of the power battery at the current moment and a temperature value of the power battery when self-heating is switched on, to obtain the actual temperature rise data.

In an embodiment, when performing the acquiring the preset calibrated temperature rise data corresponding to the self-heating current of the power battery, the processor 1001 specifically performs the following operations:
looking up the preset calibrated temperature rise data corresponding to the self-heating current from a preset temperature rise data calibration table based on the self-heating current of the power battery.

In an embodiment, when performing the controlling the self-heating of the power battery based on the actual temperature rise data and the preset calibrated temperature rise data, the processor 1001 specifically performs the following operations:
computing a temperature rise data difference between the actual temperature rise data and the preset calibrated temperature rise data, and controlling the self-heating of the power battery based on the temperature rise data difference.

In an embodiment, when performing the controlling the self-heating of the power battery based on the actual temperature rise data and the calibrated temperature rise data, the processor 1001 specifically performs the following operations:
computing a rate difference between the actual temperature rise rate and the calibrated temperature rise rate;
computing, in response to the rate difference exceeding a first preset threshold range, a magnitude of a deviation between the rate difference and the first preset threshold range; and
controlling the self-heating of the power battery based on the magnitude of the deviation.

In an embodiment, when performing the controlling the self-heating of the power battery based on the actual temperature rise data and the calibrated temperature rise data, the processor 1001 specifically performs the following operations:
computing a temperature rise difference between the actual cumulative temperature rise and the calibrated cumulative temperature rise;
computing, in response to the temperature rise difference exceeding a second preset threshold range, a magnitude of a deviation between the temperature rise difference and the second preset threshold range; and
controlling the self-heating of the power battery based on the magnitude of the deviation.

In an embodiment, when performing the controlling the self-heating of the power battery based on the actual temperature rise data and the calibrated temperature rise data, the processor 1001 specifically performs the following operations:
computing a rate difference between the actual temperature rise rate and the calibrated temperature rise rate;
computing a temperature rise difference between the actual cumulative temperature rise and the calibrated cumulative temperature rise;
computing, in response to the rate difference exceeding a first preset threshold range and the temperature rise difference exceeding a second preset threshold range, a magnitude of a deviation between a current temperature rise state and a normal temperature rise state of the power battery based on the rate difference, the first preset threshold range, the temperature rise difference, and the second preset threshold range; and
controlling the self-heating of the power battery based on the magnitude of the deviation.

In an embodiment, when performing the controlling the self-heating of the power battery based on the magnitude of the deviation, the processor 1001 specifically performs the following operations:
determining a failure level based on the magnitude of the deviation;
determining a failure handling strategy from a preset failure handling strategy library based on the failure level; and
controlling the self-heating of the power battery based on the failure handling strategy.

In an embodiment, when performing the controlling the self-heating of the power battery based on the failure handling strategy, the processor 1001 specifically performs the following operations:
stopping the self-heating of the power battery, in response to the failure handling strategy being a heating stop strategy;
   or,
downregulating, in response to the failure handling strategy being a power reducing strategy, a self-heating power of the power battery.

In an embodiment, the processor 1001 further performs the following operations:
detecting the temperature value of the power battery in the self-heating process; and
stopping the self-heating of the power battery, in response to the temperature value of the power battery reaching a preset temperature value.

In an embodiment, the processor 1001 further performs the following operations:
detecting an operating parameter of a current vehicle in real time in the self-heating process;
determining whether there is a failure in the current vehicle based on the operating parameter; and
stopping the self-heating of the power battery, in response to there being a failure in the current vehicle.

In an embodiment of the present application, in a self-heating process of the power battery, actual temperature rise data of the power battery is acquired; preset calibrated temperature rise data corresponding to a self-heating current of the power battery is acquired; and the self-heating of the power battery is controlled based on the actual temperature rise data and the preset calibrated temperature rise data. Therefore, using the embodiment of the present application, since the self-heating of the power battery is controlled based on the actual temperature rise data and the preset calibrated temperature rise data in the present application, when there is a large difference between the actual temperature rise data and the preset calibrated temperature rise data, it can be determined that the temperature rise of the power battery is abnormal. In this case, a corresponding strategy can be adopted to ensure normal operation of the self-heating of the power battery.

Those of ordinary skill in the art can understand that all or a part of the processes of implementation of the method in the above embodiments can be completed by instructing relevant hardware through the computer program. The program may be stored in a computer-readable storage medium. The execution of the program may include the processes in the above method embodiments. The storage medium may be a magnetic disk, an optical disk, a read-only memory, or a random access memory, etc.

Only preferred embodiments of the present application are disclosed above. Of course, the preferred embodiments cannot be used to limit the scope of claims of the present application. Therefore, equivalent alterations made based on the claims of the present application are still encompassed within the scope of the present application.

## Claims

1. A method for controlling self-heating of a power battery, comprising:
acquiring actual temperature rise data of the power battery in a self-heating process of the power battery;
acquiring preset calibrated temperature rise data corresponding to a self-heating current of the power battery; and
controlling the self-heating of the power battery based on the actual temperature rise data and the preset calibrated temperature rise data.

2. The method according to claim 1, wherein the acquiring the actual temperature rise data of the power battery comprises:
acquiring a temperature value at each moment in the self-heating process of the power battery; and
computing an actual temperature rise rate at a current moment based on the temperature value at each moment to obtain the actual temperature rise data.

3. The method according to claim 1 or 2, wherein the acquiring the actual temperature rise data of the power battery comprises:
computing actual cumulative temperature rise based on the temperature value of the power battery at the current moment and a temperature value of the power battery when self-heating is switched on, to obtain the actual temperature rise data.

4. The method according to claim 1 or 2, wherein the acquiring the preset calibrated temperature rise data corresponding to the self-heating current of the power battery comprises:
looking up the preset calibrated temperature rise data corresponding to the self-heating current from a preset temperature rise data calibration table based on the self-heating current of the power battery.

5. The method according to claim 1, wherein the controlling the self-heating of the power battery based on the actual temperature rise data and the preset calibrated temperature rise data comprises:
computing a temperature rise data difference between the actual temperature rise data and the preset calibrated temperature rise data, and controlling the self-heating of the power battery based on the temperature rise data difference.

6. The method according to claim 5, wherein the actual temperature rise data comprises an actual temperature rise rate, and the preset calibrated temperature rise data comprises a calibrated temperature rise rate; and
the computing the temperature rise data difference between the actual temperature rise data and the preset calibrated temperature rise data, and the controlling the self-heating of the power battery based on the temperature rise data difference comprises:
computing a rate difference between the actual temperature rise rate and the calibrated temperature rise rate;
computing, in response to the rate difference exceeding a first preset threshold range, a magnitude of a deviation between the rate difference and the first preset threshold range; and
controlling the self-heating of the power battery based on the magnitude of the deviation.

7. The method according to claim 5, wherein the actual temperature rise data comprises actual cumulative temperature rise, and the preset calibrated temperature rise data comprises calibrated cumulative temperature rise; and
the computing the temperature rise data difference between the actual temperature rise data and the preset calibrated temperature rise data, and the controlling the self-heating of the power battery based on the temperature rise data difference comprises:
computing a temperature rise difference between the actual cumulative temperature rise and the calibrated cumulative temperature rise;
computing, in response to the temperature rise difference exceeding a second preset threshold range, a magnitude of a deviation between the temperature rise difference and the second preset threshold range; and
controlling the self-heating of the power battery based on the magnitude of the deviation.

8. The method according to claim 5, wherein the actual temperature rise data comprises an actual temperature rise rate and actual cumulative temperature rise, and the preset calibrated temperature rise data comprises a calibrated temperature rise rate and a calibrated cumulative temperature rise; and
the computing the temperature rise data difference between the actual temperature rise data and the preset calibrated temperature rise data, and the controlling the self-heating of the power battery based on the temperature rise data difference comprises:
computing a rate difference between the actual temperature rise rate and the calibrated temperature rise rate;
computing a temperature rise difference between the actual cumulative temperature rise and the calibrated cumulative temperature rise;
computing, in response to the rate difference exceeding the first preset threshold range and the temperature rise difference exceeding the second preset threshold range, a magnitude of a deviation between a current temperature rise state and a normal temperature rise state of the power battery based on the rate difference, the first preset threshold range, the temperature rise difference, and the second preset threshold range; and
controlling the self-heating of the power battery based on the magnitude of the deviation.

9. The method according to any one of claims 6-8, wherein the controlling the self-heating of the power battery based on the magnitude of the deviation comprises:
determining a failure level based on the magnitude of the deviation;
determining a failure handling strategy from a preset failure handling strategy library based on the failure level; and
controlling the self-heating of the power battery based on the failure handling strategy.

10. The method according to claim 9, wherein the controlling the self-heating of the power battery based on the failure handling strategy comprises:
stopping the self-heating of the power battery, in response to the failure handling strategy being a heating stop strategy;
or,
downregulating, in response to the failure handling strategy being a power reducing strategy, a self-heating power of the power battery.

11. The method according to any one of claims 1, 2, and 5-8, wherein the method further comprises:
detecting the temperature value of the power battery in the self-heating process; and
stopping the self-heating of the power battery, in response to the temperature value of the power battery reaching a preset temperature value.

12. The method according to any one of claims 1, 2, and 5-8, wherein the method further comprises:
detecting an operating parameter of a current vehicle in real time in the self-heating process;
determining whether there is a failure in the current vehicle based on the operating parameter; and
stopping the self-heating of the power battery, in response to there being a failure in the current vehicle.

13. A system for controlling self-heating of a power battery, comprising:
an actual temperature rise data acquisition module configured to acquire actual temperature rise data of the power battery in a self-heating process of the power battery;
a calibrated temperature rise data acquisition module configured to acquire preset calibrated temperature rise data corresponding to a self-heating current of the power battery; and
a self-heating control module configured to control the self-heating of the power battery based on the actual temperature rise data and the preset calibrated temperature rise data.

14. A computer storage medium, wherein the computer storage medium stores a plurality of instructions, and the instructions are adapted to be loaded by a processor and execute the method according to any one of claims 1-12.

15. An electronic device, wherein the electronic device comprises the system for controlling self-heating of a power battery according to any one of claims 1-12.
